# EUROPÄISCHE PATENTSCHRIFT

(11) **EP 2 825 771 B1**
(45) Veröffentlichungstag und Bekanntmachung des Hinweises auf die Patenterteilung: **01.09.2021**
(21) Anmeldenummer: 13708124.6
(22) Anmeldetag: 01.03.2013
(51) Int. Cl.: F03D 7/02

(54) **VERFAHREN ZUM STEUERN EINER WINDENERGIEANLAGE OHNE VERFÜGBARER NETZUNTERSTÜTZUNG**
METHOD OF CONTROLLING A WIND TURBINE WITHOUT A GRID SUPPORT
PROCEDE A COMMANDER D'EOLIENNE SANS SOUTIEN DU RESEAU

(30) Priorität: 16.03.2012 DE 102012204239
(43) Veröffentlichungstag der Anmeldung: 21.01.2015
(73) Patentinhaber: Wobben Properties GmbH, 26607 Aurich (DE)
(72) Erfinder: BEEKMANN, Alfred, 26639 Wiesmoor (DE)
(74) Vertreter: Eisenführ Speiser
(86) Internationale Anmeldenummer: PCT/EP2013/054179
(87) Internationale Veröffentlichungsnummer: WO 2013/135504

(56) Entgegenhaltungen:
- EP-A1- 2 565 443
- EP-A1- 2 589 799
- EP-A2- 1 961 957
- WO-A1-2005/113964
- WO-A1-2005/116445
- US-A1- 2010 013 224
- US-B2- 7 394 166
- None

## Beschreibung

Die vorliegende Erfindung betrifft ein Verfahren zum Steuern einer Windenergieanlage sowie ein solche Windenergieanlage.

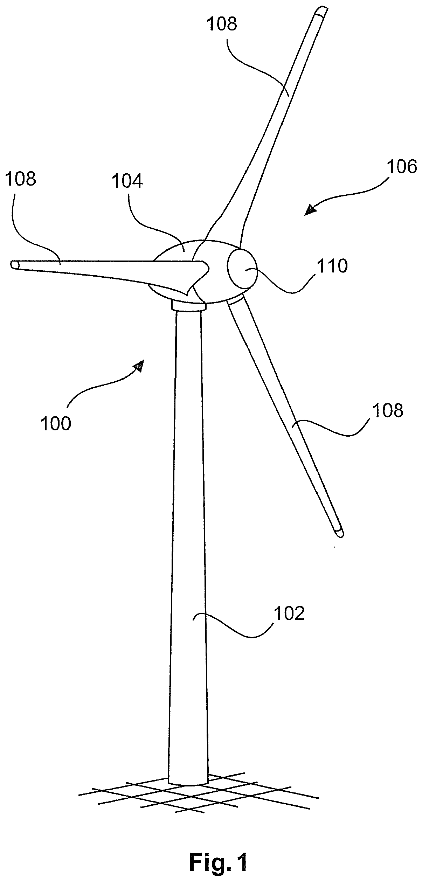

Windenergieanlagen sind allgemein bekannt und ein Beispiel einer Windenergieanlage ist in Fig. 1 gezeigt. Solche Windenergieanlagen sind dazu vorgesehen, Energie aus dem Wind in elektrische Energie umzuwandeln und in ein elektrisches Versorgungsnetz, das nachfolgend auch als elektrisches Netzwerk oder einfachen Netz bezeichnet wird, einzuspeisen.

Bevor die Windenergieanlage elektrische Leistung ins Netz einspeisen kann, muss sie jedoch zunächst errichtet und an das Netz angeschlossen werden. Nachdem sie im Wesentlichen errichtet ist, sind häufig Funktionstests vorgesehen, bevor die Anlage schließlich ans Netz angeschlossen und daran betrieben werden kann. Während dieser Zeit kann die ansonsten möglicherweise bereits vollständig errichtete Anlage nicht ordnungsgemäß betrieben werden, insbesondere überhaupt nicht betrieben werden. Dabei besteht, je nach Aufstellungsort, die Gefahr, dass die Windenergieanlage auskühlt und sich Feuchtigkeit, insbesondere aus der Luft, absetzt. Weiterhin besteht die Gefahr, dass die Windenergieanlage auch Feuchtigkeit durch Regen ausgesetzt ist. Zwar ist eine Windenergieanlage im errichteten Zustand oftmals im Wesentlichen mit einer geschlossenen Gondel und einem geschlossenen Turm versehen, dennoch kann Regen jedoch bspw. durch Lüftungsöffnungen eindringen, durch die er im laufenden Betrieb der Anlage aufgrund eines nach außen gerichteten Luftstroms der Lüftung nicht eindringen kann. Auch kann eine ungünstige Ausrichtung der Windenergieanlage, insbesondere einer Gondel der Windenergieanlage, das Eindringen von Regen begünstigen.

Um diesem Problem zu begegnen, können solche Lüftungsschlitze verschlossen werden oder empfindliche Anlagenteile können abgedeckt oder eingehüllt werden. Solche Maßnahmen erfordern jedoch einen erhöhten Aufwand, es besteht die Gefahr, dass solche Abdeckungen oder Einhüllungen nicht oder nicht vollständig entfernt werden, wenn die Anlage schließlich in Betrieb geht. Das Errichten sowie etwaige Funktionstests werden erschwert.

Alternativ kann, um Beschädigungen durch sich absetzende oder eindringende Feuchtigkeit zu verändern, eine Beheizung und/oder Lufttrocknung durch eine entsprechende Vorrichtung vorgesehen sein. Alternativ kann einfach versucht werden, die Anlage so schnell wie möglich fertigzustellen und ans Netz anzuschließen. Sofern möglich, kann versucht werden, die Anlage bei weniger kritischen Wetterlagen zu errichten, was häufig aber unpraktikabel ist.

Teilweise werden Windenergieanlagen vollständig errichtet, könnten ans Netz angeschlossen werden, was jedoch zunächst nicht möglich ist, weil das Netz bzw. ein entsprechender Zweig des Netzes zur Windenergieanlage noch nicht existiert. Ggf. lassen auch Zulassungen für den Anschluss der Windenergieanlage oder für das Bereitstellen eines entsprechenden Netzzweiges zum Anschließen auf sich warten. In diesem Fall wäre auch das Betreiben einer Heizvorrichtung über Lüftungsvorrichtung und/oder Trocknungsvorrichtung mangels Netzanschluss nicht oder schwierig möglich. Ein Netzanschluss wird nämlich oftmals nicht nur dazu benötigt, elektrische Leistung der Windenergieanlage ins Netz einzuspeisen, sondern auch dafür, elektrische Leistung aus dem Netz zum Anlaufen der Windenergieanlage und/oder zum Betreiben von Anlageneinrichtungen bereitzustellen. Ohne einen Netzanschluss kann die Windenergieanlage somit nicht betrieben werden und es besteht die beschriebene Gefahr der Feuchtigkeitsabsetzung oder des Eindringens von Feuchtigkeit, was teilweise sehr schnell zu einer Beschädigung von Teilen der Anlage, insbesondere von elektrischen Einrichtungen der Anlage führen kann.

Das deutsche Patent- und Markenamt hat in der Prioritätsanmeldung hat folgenden Stand der Technik recherchiert: US 2010/0013224 A1, US 2012/0056425 A1 und US 7,394,166 B2. Ferner hat das Europäische Patentamt die Dokumente EP 1 961 957 A2, WO 2005/113964 A1 und WO 2005/116445 A1 recherchiert.

Der Erfindung liegt somit die Aufgabe zugrunde, wenigstens eines der genannten Probleme zu adressieren. Insbesondere soll eine Lösung geschaffen werden, die das Eindringen oder Absetzen von Feuchtigkeit bei einer noch nicht an ein elektrisches Versorgungsnetz angeschlossenen Windenergieanlage verhindert oder zumindest verringert. Zumindest soll eine alternative Lösung vorgeschlagen werden.

Erfindungsgemäß wird ein Verfahren nach Anspruch 1 vorgeschlagen. Demnach wird von einer Windenergieanlage ausgegangen, die einen Generator aufweist, die für das Einspeisen elektrischer Leistung in ein elektrisches Versorgungsnetz vorgesehen ist und die aber noch nicht an das elektrische Versorgungsnetz angeschlossen ist. Hierfür wird vorgeschlagen, elektrische Leistung mit dem Generator zu erzeugen und die erzeugte elektrische Leistung zum Versorgen elektrischer Elemente der Windenergieanlage zu verwenden. Mit anderen Worten wird die Windenergieanlage mit dem Ziel einer geringen Leistungserzeugung in Betrieb genommen, wobei gerade soviel elektrische Leistung erzeugt wird, dass elektrische Elemente der Windenergieanlage in Betrieb genommen werden können. Diese Inbetriebnahme der Windenergieanlage ergibt hinsichtlich der Erzeugung und Einspeisung elektrischer Energie in das Versorgungsnetz keinerlei Sinn, weil ein Netzanschluss noch gar nicht vorhanden ist. Der Betrieb der Windenergieanlage erfolgt einzig aus dem Grund und in dem Umfang, dass die Anlage keinen Feuchtigkeitsschaden nimmt. Vereinfacht ausgedrückt, wird die Windenergieanlage hierdurch nach ihrer Errichtung aber vor dem Anschluss an das Netz vor einem Vergammeln geschützt.

Es werden insbesondere solche elektrischen Elemente mit elektrischer Leistung versorgt, die ansonsten Gefahr laufen, Feuchtigkeit anzunehmen und solche Elemente, die insgesamt die Windenergieanlage vor dem Eindringen oder Absetzen von Feuchtigkeit schützen können.

Vorzugsweise wird wenigstens eine Steuervorrichtung zum Steuern der Windenergieanlage hierbei mit elektrischer Leistung versorgt. Insoweit kann grundsätzlich eine Steuerung in Betrieb genommen werden, die weitere Ansteuerungen und Inbetriebnahmen von Elementen steuern kann.

Vorzugsweise wird auch oder alternativ eine Azimutverstellvorrichtung zum Verstellen einer Ausrichtung der Windenergieanlage zum Wind mit elektrischer Leistung versorgt und entsprechend betrieben. Eine solche Azimutverstellvorrichtung ist für sog. Horizontalachsenwindenergieanlagen vorgesehen die den heutzutage mit Abstand häufigsten Typ darstellt und zu denen ein Beispiel in Fig. 1 gezeigt ist. Durch das Betreiben dieser Azimutverstellvorrichtung wird zunächst einmal diese selbst in Betrieb genommen und damit vor dem Absetzen oder Eindringen von Feuchtigkeit geschützt. Des Weiteren kann die Windenergieanlage zum Wind ausgerichtet werden, was somit auch der üblichen Ausrichtung entspricht, die dabei auch hinsichtlich Regen optimal oder zumindest vorteilhaft sein kann. Es ist auch eine Ausrichtung der Windenergieanlage zum Wind zweckmäßig, wenn die Windenergieanlage aus dem Wind elektrische Leistung erzeugen soll, selbst wenn nur wenig elektrische Leistung erzeugt wird.

Vorzugsweise wird eine Heizvorrichtung zum Beheizen eines Teils der Windenergieanlage in Betrieb genommen. Eine solche Heizeinrichtung kann bspw. eine Gondelheizung sein, die die Gondel bspw. sonst für den Aufenthalt von Servicepersonal heizt. Weiterhin kann eine Heizvorrichtung hierunter fallen, die Messinstrumente wie ein Anemometer aufheizt, um dieses gegen Vereisung zu schützen. Hierdurch kann auch eine ordnungsgemäße Messung der Windbedingungen gewährleistet sein, die wiederum zum Betreiben der Windenergieanlage zweckmäßig oder sogar notwendig ist.

Eine Heizvorrichtung kann bspw. auch in den Rotorblättern vorgesehen sein, um die Rotorblätter vor einer Vereisung zu schützen bzw. um die Rotorblätter zu enteisen. Diese Rotorblattheizvorrichtungen können nun vorzugsweise auch betrieben werden, ohne dass es einen Enteisungsbedarf gibt. Solche Heizvorrichtungen für die Rotorblätter zeichnen sich auch dadurch aus, dass sie einen vergleichsweise hohen Energiebedarf haben. Das wiederum bedeutet, dass entsprechend viel Leistung für diesen Feuchtigkeitsschutzbetrieb benötigt wird. Mit Feuchtigkeitsschutzbetrieb wird hiermit der Betrieb der Windenergieanlage bezeichnet, bei dem die Windenergieanlage nicht in das Netz einspeist und lediglich zum Selbstschutz, also Schutz gegen sich absetzende oder eindringende Feuchtigkeit, betrieben wird. Wird also die Heizvorrichtung zum Beheizen der Rotorblätter verwendet, entsteht ein verhältnismäßig hoher Bedarf an elektrischer Leistung, der wiederum erforderlich macht, dass die Windenergieanlage eine entsprechend große Leistung erzeugt, was wiederum dazu führt, dass alle auch sonst im regulären Betrieb verwendeten Elemente, oder zumindest viele auch im regulären Betrieb verwendeten Elemente im Grunde wie im Normalbetrieb arbeiten. Gelingt es also, möglichst viele Elemente der Windenergieanlage im Normalbetrieb oder in einem ähnlichen Zustand arbeiten zu lassen, führt dies ganz automatisch zu deren Selbstschutz gegen Feuchtigkeit.

Ein zum Einspeisen in das elektrische Versorgungsnetz benötigter Wechselrichter wäre allerdings bei einem solchen Feuchtigkeitsschutzbetrieb nicht automatisch in einem Normalbetriebszustand oder einem ähnlichen Betriebszustand, wenn die Windenergieanlage nicht ans Netz angeschlossen ist. Unter anderem deshalb wird vorgeschlagen, dass auch der bzw. die vorhandenen Wechselrichter mit elektrischer Leistung versorgt werden. Vorzugsweise kann eine künstliche Last, wie bspw. Chopperwiderstände, vorgesehen sein, die der Wechselrichter ansteuert. Der Wechselrichter erzeugt also ein, wenn auch niedriges, Stromsignal, das nicht ins Netz eingespeist wird, sondern zu einer Ansteuerung solcher Chopperwiderstände verwendet wird. Der so erzeugte Ausgangsstrom wird somit in Wärme umgesetzt. Hierfür kann es vorteilhaft sein, dass diese Chopperwiderstände an Stellen in der Windenergieanlage angeordnet sind, die Bedarf einer Heizung, insbesondere in diesem Feuchtigkeitsschutzbetrieb, haben. Gleichzeitig führt aber auch das Betreiben der Wechselrichter dazu, dass die Wechselrichter selbst Verlustwärme erzeugen und sich damit selbst vor Feuchtigkeit schützen können. Zum Einen setzt sich keine oder weniger Feuchtigkeit an Elementen der Wechselrichter ab, wenn diese sich im Betrieb erwärmen. Zum Anderen kann der Wechselrichter auch zum Inbetriebnehmen von Lüftern in den Wechselrichtern führen, die ebenfalls einem Feuchtigkeitsniederschlag oder anderen Feuchtigkeitseindringen entgegenwirken. Die Chopperwiderstände können Bestandteil der Wechselrichter sein.

Um möglichst viel Leistung über die genannten Chopperwiderstände abführen zu können, werden mehrere Chopperwiderstände oder mehrere Chopperwiderstandsbänke verwendet, die wechselweise angesteuert werden, damit zwischenzeitlich eine Abkühlung der jeweiligen Chopperwiderstände bzw. Chopperwiderstandsbänke erfolgen kann, um eine Überhitzung derselben zu vermeiden.

Solche Chopperwiderstände oder Chopperwiderstandsbänke können grundsätzlich auch anders als über die Wechselrichter angesteuert werden. Bspw. kann eine Ansteuervorrichtung zum Ansteuern dieser Chopperwiderstände oder Chopperwiderstandsbänke vorgesehen sein, die lediglich zu diesem Zweck vorhanden ist. Es können auch Chopperwiderstände oder Chopperwiderstandsbänke verwendet werden, die im laufenden Betrieb der Anlage als Sicherheitseinrichtung vorgesehen sind, nämlich um im Falle einer plötzlichen Abschaltung der Windenergieanlage noch erzeugte Leistung abzunehmen.

Gemäß einer weiteren Ausführungsform wird vorgeschlagen, dass in vorbestimmbaren Prüfzeitabständen überprüft wird, ob der Generator und/oder die Windenergieanlage in Betrieb ist und elektrische Leistung erzeugt, wobei der Generator bzw. die Windenergieanlage in Betrieb genommen wird, wenn sich herausstellt, dass er bzw. sie nicht in Betrieb ist und keine elektrische Leistung erzeugt. Grundsätzlich ist es vorteilhaft, die Windenergieanlage generell auch ohne Anschluss am Netz in dem beschriebenen Feuchtigkeitsschutzbetrieb zu betreiben. Dabei besteht die Möglichkeit, dass der Wind soweit nachlässt, dass gar keine Leistung mehr erzeugt werden kann. In diesem Fall wird die Windenergieanlage zunächst anhalten. Insbesondere eine solche Situation soll durch die vorgeschlagene Überprüfung erkannt werden. Die vorbestimmbaren Prüfzeitabstände können bspw. eine Stunde, eine halbe Stunde oder zwei Stunden oder ähnliche Werte betragen. Die Prüfzeitabstände können auch individuell vorgegeben werden, wie bspw. abhängig vom Aufstellungsort oder abhängig von der Jahreszeit. Wird eine Windenergieanlage in einer warmen, trockenen Region im Sommer aufgestellt, wenn zudem auch nicht mit Regen zu rechnen ist, können solche Prüfzeitabstände lang sein. Wird hingegen eine Windenergieanlage in einer nasskalten Region und insbesondere zu einer nasskalten Jahreszeit aufgestellt, kann es vorteilhaft sein, kurze Prüfzeitabstände zu wählen.

Vorzugsweise erfolgt ein Inbetriebnehmen der Windenergieanlagen für den Feuchtigkeitsschutzbetrieb mit Hilfe einer Hilfsenergiequelle, insbesondere mit einer Batterie und/oder einem Hilfsgenerator wie einem Dieselgenerator. Dies kann sowohl das erste Inbetriebnehmen für diesen Feuchtigkeitsschutzbetrieb betreffen oder auch das Inbetriebnehmen, das gemäß einer Ausführungsform vorgeschlagen wird, wenn nach einem vorbestimmbaren Prüfzeitabstand eine Überprüfung ergibt, dass der Generator bzw. die Windenergieanlage nicht mehr in Betrieb ist und keine Leistung mehr erzeugt. Eine solche Hilfsenergiequelle kann eine mobile Hilfsenergiequelle sein, oder eine zumindest zeitweise fest installierte Hilfsenergiequelle. Letzteres wird besonders dann vorgeschlagen, wenn damit zu rechnen ist, dass ein Netzanschluss noch längere Zeit auf sich warten lässt. Eine solche Hilfsquelle kann auch dann vor Ort verbleiben, wenn die Windenergieanlage an einem schwachen Netz oder über eine schwache Kopplung zum Netz mit demselben verbunden ist und entsprechend auch in Zukunft, also selbst dann wenn die Windenergieanlage ans Netz angeschlossen ist, mit einer längeren Trennung vom Netz gerechnet werden kann.

Es wird darauf hingewiesen, dass eine Überprüfung, ob der Generator noch in Betrieb ist, vergleichsweise wenig Energie benötigt und bspw. mit einer herkömmlichen, kleinen Batterie oder sogar Kondensatoreinheit auskommt. Die Überprüfung selbst benötigt im Grunde nur Energie zum Betreiben eines kleines Mikroprozessors bzw. Mikrocomputers. Es ist auch möglich, einen Netzanschluss zu verwenden. So kann es möglich sein, dass die Windenergieanlage noch nicht am Netz angeschlossen ist, ggf. auch noch nicht an das Netz angeschlossen werden kann, dass aber ein Netzanschluss vorhanden ist, der zum Ausführen des Feuchtigkeitsschutzbetriebs ausreicht, zumindest zu der beschriebenen Überprüfung ausreicht. Erst wenn eine Überprüfung zu dem Ergebnis führt, dass eine Inbetriebnahme oder Wiederinbetriebnahme eines Feuchtigkeitsschutzbetriebes erfolgen muss, wird deutlich mehr Energie und deutlich mehr Leistung benötigt, die dann über die Hilfsquelle zugeschaltet werden kann. Alternativ oder ergänzend kann überprüft werden, ob ausreichend Wind vorhanden ist. Gemäß einer Ausführungsform wird vorgeschlagen, dass ein Feuchtigkeitsschutzbetrieb abhängig von Bedingungen innerhalb oder außerhalb der Windenergieanlage, wie bspw. Feuchte und/oder Temperatur ein Feuchtigkeitsschutzbetrieb, veranlasst wird.

Für die Überwachung, ob die Windenergieanlage in Betrieb ist, kann auch ein Notstromaggregat vorgesehen sein.

Vorzugsweise wird vorgeschlagen, dass wenigstens eines der elektrischen Elemente mit elektrischer Leistung von der Hilfsenergiequelle direkt versorgt wird, wenn das Inbetriebnehmen des Generators der Windenergieanlage mangels Wind nicht möglich ist. Bspw. kann hierfür ein Dieselgenerator sogar dauerhaft betrieben werden, wenn auch Witterungsverhältnisse einen solchen Feuchtigkeitsschutz erforderlich machen.

Weiter bevorzugt kann vorgesehen sein, dass die Windenergieanlage im Grunde ohne Fremdenergie anläuft. Hierzu können die Rotorblätter einen entsprechenden Anstellwinkel aufweisen, der etwa 60° beträgt, wenn die Segelstellung als 90° angesehen wird. Das kann auch als Eigenanlauf bezeichnet werden.

Gemäß einer weiteren Ausführungsform wird vorgeschlagen, dass nach einer vorbestimmbaren Laufzeit der Generator wieder abgeschaltet wird und/oder das Versorgen der elektrischen Elemente wieder unterbrochen wird, wenn nicht ausreichend Wind zum Betreiben des Generators vorhanden ist. Hier wird insbesondere eine Abwägung vorgeschlagen zwischen dem Verbrauch von Energie einer Hilfsenergiequelle, insbesondere dem Verbrauch eines Brennstoffs, wenn bspw. ein Dieselgenerator oder anderer Verbrennungsmotor verwendet wird, einerseits, und der Dringlichkeit des Feuchtigkeitsschutzes der Elemente andererseits. Wenn es gelingt, die Windenergieanlage zu starten, sollte ein Dieselgenerator wieder gestoppt werden. Bspw. kann es auch vorteilhaft sein, bei dieser Abwägung lediglich Hilfsenergie dazu einzusetzen, die Windenergieanlage in den Wind zu drehen, damit zumindest eine Ausrichtung gemäß einem normalen Anlagenbetrieb vorherrscht. Mit anderen Worten kann es für eine gewisse Zeit, wie bspw. einen halben Tag oder einen Tag, ausreichend sein, die Windenergieanlage so auszurichten, dass es zumindest nicht in die Windenergieanlage hineinregnet. Rein vorsorglich wird darauf hingewiesen, dass eine Windrichtung auch dann vorliegen kann, wenn der Wind so schwach ist, dass der Generator nicht in Betrieb genommen werden kann.

Weiterhin wird eine Windenergieanlage zum Erzeugen elektrischer Leistung aus Wind zum Einspeisen der erzeugten elektrischen Leistung in ein elektrisches Versorgungsnetz vorgeschlagen, die dadurch gekennzeichnet ist, dass ein Verfahren gemäß einer der o.g. Ausführungsformen ausgeführt wird. Insbesondere wird eine Windenergieanlage mit einem Verfahren zum Steuern der Windenergieanlage in einem beschriebenen Feuchtigkeitsschutzbetrieb vorgeschlagen. Diese Windenergieanlage kann, wie oben beschrieben, auch dann vor Feuchtigkeit geschützt werden, wenn sie noch nicht an das elektrische Versorgungsnetz angeschlossen ist.

Vorzugsweise umfasst die Windenergieanlage eine Hilfsenergiequelle, insbesondere eine Batterie oder einen Hilfsgenerator. Die Hilfsenergiequelle ist dabei so zu dimensionieren, dass sie genügend Leistung und auch genügend Energie zum Starten der Windenergieanlage bereitstellen kann. Es wird hier insbesondere auf die Leistung und auch die Energie hingewiesen. Bspw. könnte ein zu kleiner gewählter Dieselgenerator genügend Energie bereitstellen, wenn nur der Dieseltank groß genug, ohne aber genügend Leistung, also genügend Energie pro Zeit, bereitstellen zu können. Umgekehrt kann bspw. eine Kondensatorbank ausreichend Leistung bereitstellen, die aber nicht für einen ausreichenden Zeitraum zur Verfügung steht, wenn die Kondensatorbank nicht genügend Energie gespeichert hat.

Ergänzend wird noch darauf hingewiesen, dass eine für den Netzbetrieb vorgesehene Windenergieanlage eine solche ist, die sowohl entsprechende Anschlüsse zum Anschließen an ein elektrisches Netzwerk aufweist, als auch insbesondere einen entsprechenden Wechselrichter beinhaltet, einschließlich einer entsprechenden Programmierung zum Ansteuern des Wechselrichters, der zum Einspeisen in ein elektrisches Versorgungsnetz vorgesehen ist. Dabei ist zu beachten, dass heutzutage Windenergieanlagen, die in das elektrische Versorgungsnetz einspeisen, auch entsprechende Netzvorschriften, die auch im Deutschen üblicherweise mit dem englischen Begriff Grid Code bezeichnet werden, erfüllen müssen. Erst wenn die Windenergieanlage solche Anforderungen erfüllen kann, ist sie zum Anschluss an ein elektrisches Versorgungsnetz vorgesehen bzw. vorbereitet. Ob eine Windenergieanlage tatsächlich für den Anschluss an ein elektrisches Versorgungsnetz vorgesehen oder vorbereitet ist, lässt sich letztendlich daran erkennen, ob sie schließlich an ein elektrisches Netz angeschlossen wurde.

Die Erfindung wird nun nachfolgend exemplarisch anhand von Ausführungsbeispielen unter Bezugnahme auf die begleitenden Figuren näher erläutert.
- Fig. 1: zeigt eine Windenergieanlage in einer perspektivischen Ansicht.
- Fig. 2: zeigt schematisch eine vom Netz getrennte Windenergieanlage mit Hilfsgenerator.
- Fig. 3: zeigt ein Flussdiagramm zum Veranschaulichen des Ablaufs eines erfindungsgemäßen Steuerverfahrens.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

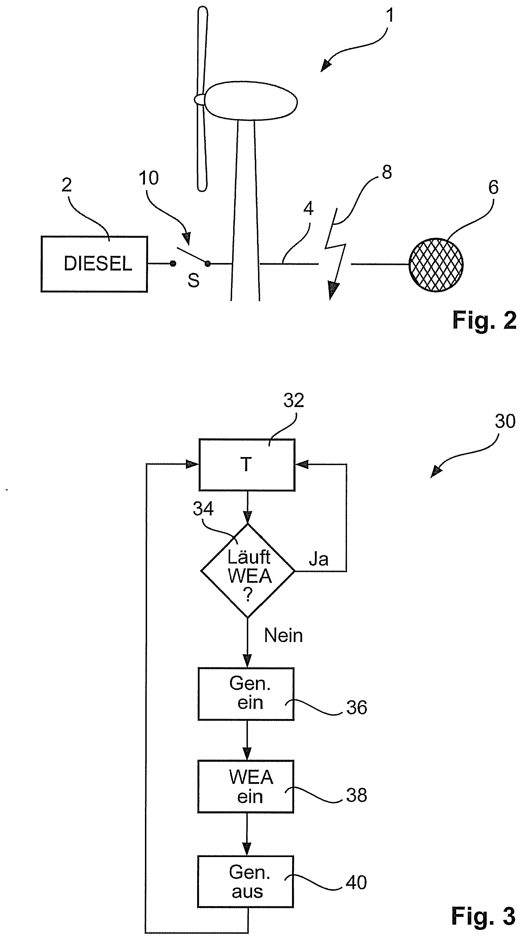

Fig. 2 zeigt eine Windenergieanlage 1 mit einer Hilfsenergiequelle 2 bzw. einem Hilfsgenerator 2, nämlich Dieselgenerator 2 als eine mögliche Ausführungsform einer solchen Hilfsenergiequelle. Die Windenergieanlage 1 ist grundsätzlich mit einer Verbindungsleitung 4 an ein elektrisches Versorgungsnetz 6 anzuschließen. Die geschilderte, der Erfindung zugrundeliegende Situation geht aber davon aus, dass die Windenergieanlage 1 nicht mit dem elektrischen Versorgungsnetz 6 verbunden ist, was durch den Störungspfeil 8 symbolisiert wird.

Die Windenergieanlage 1 ist somit vollständig oder zumindest im Wesentlichen vollständig errichtet und nur noch nicht mit dem elektrischen Versorgungsnetz 6 verbunden. Um nun die Windenergieanlage 1 gegen Feuchtigkeitsniederschlag oder Eindringen von Feuchtigkeit zu schützen bzw. die Anlage ggf. zu Entfeuchten, kann diese in Betrieb genommen werden, um Leistung für den Eigenbedarf zum Zwecke eines Feuchtigkeitsschutzes zu erzeugen. Zum Inbetriebnehmen der Windenergieanlage ist jedoch bereits Energie erforderlich, die nicht aus dem elektrischen Versorgungsnetz genommen werden kann, weil keine Verbindung zu dem elektrischen Versorgungsnetz 6 besteht. Für diesen Zweck kann der Hilfsgenerator 2 in Betrieb genommen werden und zum Anlaufen der Windenergieanlage 1 benötigte Leistung zur Windenergieanlage 1 übertragen. Ein solches Verbinden des Hilfsgenerators 2 mit der Windenergieanlage 1 ist in Fig. 2 durch den Schalter 10 veranschaulicht, der hierfür geschlossen wird. Die Windenergieanlage kann nun in Betrieb genommen werden, ihre Komponenten können dann von der Windenergieanlage selbst mit Leistung versorgt werden, sobald die Windenergieanlage 1 sich im entsprechenden Betrieb findet. Der Hilfsgenerator 2 kann dann wieder ausgeschaltet werden, während die Windenergieanlage 1 weiter läuft.

Ein solcher Ablauf wird mit dem Flussdiagramm der Fig. 3 erläutert. Dort ist eine Ablaufschleife 30 dargestellt, die zu vorbestimmbaren Prüfzeitabständen, also bspw. stündlich, durchlaufen wird.

Der vorbestimmbare Prüfzeitabstand, also die Zeit in der das Durchlaufen der Ablaufschleife 30 wiederholt wird, ist in dem Warteblock 32 hinterlegt. Dieser Warteblock 32 kann auch als Startblock 32 angesehen werden. Hier wird das Durchlaufen der Ablaufschleife 30 jeweils zu dem vorbestimmbaren Prüfzeitabstand ausgelöst und damit wiederholt. Ist ein solcher vorbestimmbarer Prüfzeitabstand bzw. eine entsprechende Wartezeit abgelaufen, erfolgt im Abfrageblock 34 eine Abfrage, ob die Windenergieanlage 1 läuft, also in Betrieb ist und insbesondere auch Leistung erzeugt, zumindest soviel Leistung, wie zum Aufrechterhalten des Betriebs erforderlich ist. Ist diese Abfrage im Abfrageblock 34 positiv, so verzweigt der Abfrageblock 34 zurück zum Warteblock 32.

Ist das Ergebnis der Abfrage im Abfrageblock 34 negativ, läuft die Windenergieanlage 1 also nicht, so wird die Ablaufschleife 30 weiter durchlaufen und zunächst der Hilfsgenerator 2, also bspw. der Dieselgenerator 2 der Fig. 2, in Betrieb genommen. Dies verdeutlicht der Hilfsgenerator-Ein-Block 36.

Sobald der Hilfsgenerator 2, der gemäß Block 36 eingeschaltet wurde, genügend elektrische Leistung bereitstellen kann, wird die Windenergieanlage 1 eingeschaltet, was der Inbetriebnahmeblock 38 veranschaulicht.

Die Windenergieanlage 1 kann nun hochlaufen und schließlich ihren Betrieb selbst aufrechterhalten und alle für ihren Betrieb benötigte Leistung selbst erzeugen.

Entsprechend kann der Hilfsgenerator 2 wieder ausgeschaltet werden, was der Hilfsgenerator-Aus-Block 40 veranschaulicht. Der Hilfsgenerator 2 ist nun ausgeschaltet und es braucht kein Treibstoff oder andere gespeicherte Energie mehr weiter zum Betrieb bzw. zum Hochlaufen der Windenergieanlage 1 verbraucht zu werden.

Ist nun die Windenergieanlage 1 in Betrieb und der Hilfsgenerator 2 wieder ausgeschaltet, kehrt der Ablauf in der Ablaufschleife 30 zurück zum Warteblock 32. Ist die Wartezeit bzw. der vorbestimmbare Prüfzeitabstand abgelaufen, startet der Warteblock 32 den Ablauf der Ablaufschleife 30 erneut.

Grundsätzlich kann die Windenergieanlage sich nun dauerhaft selbst in Betrieb halten, idealerweise bis schließlich Servicepersonal kommt, um die noch ausstehende Ankopplung mit einem elektrischen Versorgungsnetz vorzunehmen. Es kann jedoch sein, dass zwischenzeitlich die Windgeschwindigkeit soweit abfällt, dass sich die Windenergieanlage nicht mehr selbst in Betrieb halten kann, oder dass Fehler auftreten, die zunächst einem Weiterbetrieb entgegenstehen. Die Windenergieanlage schaltet sich dann selbsttätig aus. Insbesondere werden Rotorblätter in den Wind gedreht, wenn die Windenergieanlage außer Betrieb geht und eine solche Rotorblattverstellung dann nicht mehr kontrollieren kann. Es wäre wenig zweckmäßig, die Anlage nun sofort wieder mit Hilfe des Hilfsgenerators in Betrieb zu nehmen. Schließlich war die Windenergieanlage gerade in Betrieb und dürfte entfeuchtet sein. Außerdem könnte sich die Windenergieanlage aller Wahrscheinlichkeit nach gar nicht in Betrieb halten, wenn sie sich gerade mangels Wind abgeschaltet hat.

Aus diesem Grunde wird vorgeschlagen, erst eine Zeit lang abzuwarten, bevor ein Versuch der Inbetriebnahme wieder durchgeführt wird. Grundsätzlich kann also das Abwarten auch deutlich länger gewählt werden, wie bspw. nach einem oder mehreren Tagen. Eine Inbetriebnahme, bspw. im Tagesrhythmus, könnte für die Entfeuchtung bzw. das Trockenhalten der Windenergieanlage ausreichend sein. Allerdings wird es problematisch, wenn ausgerechnet zu dem Zeitpunkt, zudem nach einem Tag eine Inbetriebnahme versucht wird, kein Wind vorhanden ist. Daher ist ein Vorschlag, einen solchen Wiederinbetriebnahmeversuch im Stundenrhythmus durchzuführen.

Wenn die Wiederinbetriebnahme fehl schlägt, weil kein Wind vorhanden ist, insbesondere wenn die Inbetriebnahme mehrfach aufeinanderfolgend fehl schlägt, wird gemäß einer Ausführungsform vorgeschlagen, den Hilfsgenerator länger in Betrieb zu lassen, um wenigstens einige Komponenten der Windenergieanlage mit elektrischer Leistung zu versorgen, wenn ansonsten die Gefahr besteht, dass sich Feuchtigkeit in der Windenergieanlage absetzt oder in diese eindringt.

Vorzugsweise kann der Hilfsgenerator dazu verwendet werden, nach Errichtung der Windenergieanlage einen Funktionstest für viele der Komponenten der Windenergieanlage durchzuführen. Ist ein solcher Hilfsgenerator vorhanden, kann es möglicherweise sinnvoll sein, den Funktionstest durchzuführen, wenn wenig Wind vorhanden ist.

Die vorliegende Erfindung schafft somit auf einfache und zweckmäßige Weise einen Schutz gegen Eindringen und/oder Absetzen von Feuchtigkeit für eine errichtete aber noch nicht mit einem elektrischen Versorgungsnetz verbundene Windenergieanlage. Demnach werden Anlagen mit der selbst erzeugten Energie versorgt, was Feuchtigkeit und entsprechende Schäden, insbesondere an den elektronischen Bauteilen, verhindert. Dies wird vorgeschlagen für eine Windenergieanlage, die über keinen, insbesondere noch keinen, Netzanschluss verfügt oder auch eine Windenergieanlage die noch keine Einspeiseerlaubnis erhalten hat und somit jedenfalls elektrisch noch nicht mit dem elektrischen Versorgungsnetz verbunden ist. Mehrere Ergebnisse sollen durch einen solchen Betrieb erreicht werden.

Eine grundsätzliche Funktionalität besteht darin, die Anlage in einem normalbetriebsähnlichen Zustand zu bekommen, in der eine Versorgung der Anlagensteuerung gegeben ist und sich Eigenerwärmung der Systeme, nämlich der Komponenten der Windenergieanlage, ergibt. Hierdurch soll eine Betauung und hohe Feuchtigkeit in der Windenergieanlage vermieden werden. Die Feuchtigkeit kann elektronische und elektromechanische Komponenten beschädigen und zum Ausfall der Funktion derselben führen. Bspw. sind in der Anlagensteuerung Leiterkarten mit elektronischen Bauteilen verbaut, die durch Feuchtigkeit in ihrer Funktion beeinträchtigt werden können, was die Anlagensicherheit einschränken kann. Viele Sensoren, deren Aufgabe die Erfassung physikalischer Größen ist, können durch Eintritt von Wasser Schaden nehmen oder ausfallen.

Eine weitere grundsätzliche Funktionalität besteht darin, die Anlagenausrichtung, also die Ausrichtung der Windenergieanlage in den Wind durch entsprechende Azimutverstellmotoren zu ermöglichen. Die Ausrichtung der Windenergieanlage in den Wind kann eine Grundvoraussetzung sein, um Wassereintritt im Bereich der Gondel der Windenergieanlage zu vermeiden. Der Maschinenbau kann dahingehend entwickelt worden sein, dem Normalbetrieb optimal zu entsprechen. Der Maschinenbau geht demnach im Grunde von einer korrekt betriebenen, insbesondere korrekt ausgerichteten, Leistung erzeugenden, Windenergieanlage aus. In einem solchen Normalbetrieb ist die Anlage in den Wind gerichtet, so dass Außenverkleidungen und Dichtungssysteme den Wassereintritt aus dieser Richtung verhindern. Hiervon ausgehend kann die Dichtigkeit der Gondel ungünstig sein, wenn sich Anströmung vom Wind und vom Regen aus anderen Richtungen ergibt. Wassereintritt kann im Bereich der elektronischen und elektromechanischen Komponenten zu einer Schädigung führen.

Eine weitere grundsätzliche Funktionalität besteht darin, die Anlage so in einem normalbetriebsähnlichen Zustand zu betreiben, dass eine Versorgung der Anlagensteuerung gegeben ist und die Funktionalität der Anlagenkomponenten, insbesondere aller Anlagenkomponenten, bis auf die zur Einspeisung benötigten Komponenten, zu testen. Somit kann in einer solchen Phase von Servicemitarbeitern die Funktion der entsprechenden Anlagensteuerungssysteme getestet und im Fehlerfall repariert werden. Hierdurch können zeitliche Vorteile bei der weiteren Inbetriebnahme erzielt werden, wenn Fehler in der Zeit bis zum Netzanschluss erkannt und behoben werden können. Vorgesehene Wartungen sind somit auch ohne Netzanschluss durchführbar und verringern somit Serviceeinsatzzeiten, wenn sie vor dem Netzanschluss durchgeführt werden.

Der Betrieb der Windenergieanlage erzeugt im Anlageninneren eine Eigenerwärmung durch Abgabe von Wärme, insbesondere im Bereich der Anlagensteuerung, der Leistungserzeugung, der Leistungsübertragung und der Einspeisung.

In der Gondel im Bereich der Anlagensteuerung ist es die Wärmeerzeugung, die durch den Betrieb von Verstellmotoren entsteht und durch die Versorgung von Steuerplatinen entsteht. Ein wesentlicher Beitrag zur Erwärmung des Gondelinneren wird durch den Generator generiert. Bei einer Wandlung des Rotordrehmomentes und der Drehzahl in eine elektrische Leistung, sowie der Übertragung der elektrischen Leistung zu einer Einspeiseeinheit, entstehen Verluste, die sich in Wärme darstellen. In Komponenten der Leistungsübertragung, insbesondere in einem Gleichrichter falls vorhanden, entstehen zusätzlich Verluste, die sich wiederum hauptsächlich als Wärme darstellen bzw. in Wärme umgewandelt werden.

Weitere Elemente sind im Turm der Windenergieanlage zu erwähnen. Gemäß einer Ausführungsform sind alle Einspeiseeinheiten, insbesondere Wechselrichter, die in Leistungsschränken untergebracht sind, standardmäßig mit einem Chopperwiderstand bzw. Chopperwiderstandsbänken ausgestattet. Vereinfachend wird hier von einem Widerstand ausgegangen, der nämlich die Aufgabe hat, überschüssige Energie, die während des Betriebs vom Generator erzeugt wird und nicht ins Netz eingespeist werden kann, in Wärme umzuwandeln. Dies wird hauptsächlich für die Funktionalität der sog. FRT-Eigenschaften genutzt. Hierunter wird die Eigenschaft der Windenergieanlage verstanden, im Falle eines Fehlers im elektrischen Versorgungsnetz den Betrieb fortsetzen zu können, auch wenn hierbei kurzfristig keine Energie in das elektrische Netz abgegeben werden kann. Diese Energie kann über diese Chopperwiderstände in Wärme umgewandelt werden, während die Windenergieanlage ansonsten, also abgesehen von Einspeisungen, im Wesentlichen normal weiterbetrieben werden kann. Dies wird als Eigenschaft oder Fähigkeit des Fehlerdurchfahrens bezeichnet, wofür sich auch im Deutschen die englische Bezeichnung "Fault Right Through" abgekürzt FRT, durchgesetzt hat.

Die Detektion einer Leistungsgrenze kann durch Messung einer Zwischenkreisspannung eines Gleichstromzwischenkreises eines entsprechenden Wechselrichters erfolgen. Überschreitet diese Zwischenkreisspannung einen vorgegebenen Grenzwert, wird der Chopperwiderstand aktiviert, entsprechend Leistung umgesetzt bzw. vernichtet und eine entsprechend gesetzte Grenze eingehalten. Um die Wärmekapazität des Chopperwiderstands während dieses Feuchtigkeitsschutzbetriebs nicht zu überschreiten, können die insgesamt in einer Windenergieanlage involvierten Chopperwiderstände in Gruppen aufgeteilt werden und sequentiell zu- und abgeschaltet werden. Entsprechend können sich erhitzte Widerstände entsprechend einer solchen Aufteilung gruppenweise abkühlen, um ihr Wärmeaufnahmevermögen zu regenerieren. Eine solche Steuerung kann bspw. von einer entsprechenden Leistungssteuerungssteuerplatine überwacht werden, die sonst Aufgaben der FACTS-Leistungssteuerung übernimmt.

Die hierdurch erzeugte Wärme kann im unteren Bereich des Turms, in dem die entsprechenden Elemente angeordnet sind, zur Erhöhung der Umgebungstemperatur genutzt werden und verhindert somit die Betauung von elektronischen Bauteilen.

Der beschriebene Feuchtigkeitsschutzbetrieb kann auch als Selbstversorgungsbetrieb oder Selbstversorgungsmodus, englisch: "Self-Supply-Mode", bezeichnet werden. Er dient zur Selbstversorgung der Anlage und es werden möglichst alle Anlagenteile mit Spannung versorgt, einschließlich der Heizungen in den Schaltschränken. Er dient somit dazu, Schäden an elektrischen Komponenten aufgrund längerer Stillstandszeiten der Windenergieanlage vorzubeugen. Dieser "Self-Supply-Mode" dient somit zur Selbstversorgung der Anlage und die Anlage befindet sich somit in einem normalen Betriebszustand, aber ohne Netzversorgung. Die Windenergieanlage arbeitet in diesem Fall autark und erzeugt nur soviel Energie bzw. Leistung, wie sie selber verbraucht.

Alle Anlagenteile werden möglichst mit Spannung versorgt. Damit funktionieren auch die Heizungen in den Schaltschränken und außerdem wird der Generator erwärmt, nämlich der Generator der Windenergieanlage, der zu unterscheiden ist von dem separaten Hilfsgenerator, der gemäß Fig. 2 beispielhaft als Dieselgenerator genannt wurde. Wird dieser Selbstversorgungsmodus aktiviert, kann sich auch der Aufwand erhöhen, die Windenergieanlage in Betrieb zu halten, weil z.B. bei Windmangel oder einer Störung der Windenergieanlage mit Hilfe eines Stromerzeugers, wie dem genannten Hilfsgenerator, neu gestartet werden muss.

Beispielsweise können Windenergieanlagen mit einem relativ kleinen Notstromaggregat mit bspw. 11kW oder mehr Leistung gestartet werden. Diese Anlagen bleiben bei einer maximalen Leistung von ca. 30kW in Betrieb, bis sie aufgrund von Windmangel oder eines anderen Ereignisses oder Status wieder gestoppt und abgeschaltet werden.

Gemäß einer Ausführungsform wird ein Schaltmittel vorgesehen, das in einem Schaltschrank bereitgestellt werden kann, das an eine Notstromverteilung angeschlossen wird und die Anlagensteuerung der Windenergieanlage über eine Umschaltung mit Spannung aus dem elektrischen Versorgungsnetz versorgt. Insoweit wäre entgegen anderen oben beschriebenen Ausführungsformen zunächst ein funktionierender Netzanschluss vorhanden. Bei Ausfall der Netzspannung wird die Verbindung zum Steuerstrang getrennt und bei Spannungswiederkehr, insbesondere wenn ein entsprechendes Problem in dem elektrischen Versorgungsnetz behoben ist, erfolgt die Wiederzuschaltung der Netzspannung. Weiterhin erfolgt eine Verbindung zu einem Dieselgenerator oder Dieselaggregat, das auch als zentrales Dieselaggregat für mehrere Windenergieanlagen vorgesehen sein kann. Dadurch wird eine Umschaltung zwischen Netz- und Hilfsversorgung erreicht, es erfolgt also eine Umschaltung zwischen dem elektrischen Versorgungsnetz und dem Dieselaggregat. Weiterhin kann eine manuelle Abschaltvorrichtung mit Leistungsschalter vorgesehen sein. Außerdem ist eine übergeordnete Steuerung vorgesehen, die eine Ausgabeschnittstelle zur Kommunikation mit anderen Elementen der Windenergieanlage beinhaltet. Weiterhin kann eine Kommunikation mit dem sog. Scada-System zum Austausch steuerungsrelevanter Daten hergestellt werden. Über eine solche Ein-Ausgabeschnittstelle kann eine entsprechende Umschaltung der Versorgung über das elektrische Versorgungsnetz oder das beispielhaft genannten Dieselaggregat erfolgen. Eine Versorgung über das elektrische Versorgungsnetz kann vorgesehen sein, wenn die Windenergieanlage zwar schon am Netz angeschlossen ist, aber noch nicht zum Einspeisen vorbereitet ist bzw. dazu noch keine Freigabe hat.

Es wird zudem vorgeschlagen, eine unterbrechungsfreie Stromversorgung, die üblicherweise auch als USV bezeichnet wird, für die Anlagensteuerung vorzusehen. Diese kann auch für den Selbstversorgungsbetrieb bzw. Self-Supply-Mode verwendet werden. Diese USV versorgt die Anlagensteuerung, also die Steuerung der Windenergieanlage, bei kurzzeitigem Netzausfall mit Spannung und wird somit auch für den Selbstversorgungsbetrieb vorgeschlagen, in dem die USV auch die Anlagensteuerung mit Spannung versorgen kann, ohne dass die Windenergieanlage ausschaltet. Als Energiespeicher verwendet die USV keine zusätzlichen Akkumulatoren, auch wenn das möglich wäre, die zyklisch ausgetauscht werden müssen, sondern verwendet den Gleichspannungszwischenkreis der entsprechenden Wechselrichter der Anlagensteuerung als Energiespeicher.

## Patentansprüche

1. Verfahren zum Steuern einer einen Generator umfassenden, für das Einspeisen elektrischer Leistung in ein elektrisches Versorgungsnetz (6) vorgesehenen, aber noch nicht, in einem Zeitraum von der im Wesentlichen Errichtung der Windenergieanlage bis zum Anschluss der Windenergieanlage an das elektrische Versorgungsnetz, an das elektrische Versorgungsnetz (6) angeschlossenen Windenergieanlage (1), umfassend die Schritte
- Erzeugen elektrischer Leistung mit dem Generator und
- Versorgen elektrischer Elemente der Windenergieanlage (1) mit der erzeugten Leistung.

2. Verfahren nach Anspruch 1,
**dadurch gekennzeichnet, dass**
die Windenergieanlage (1) in Betrieb genommen wird, ohne dass sie Leistung in das elektrische Versorgungsnetz (6) einspeist.

3. Verfahren nach Anspruch 1 oder 2,
**dadurch gekennzeichnet, dass**
die elektrischen Elemente wenigstens
- eine Steuervorrichtung zum Steuern der Windenergieanlage (1),
- eine Azimutverstellvorrichtung zum Verstellen einer Ausrichtung der Windenergieanlage (1) zum Wind,
- eine Heizvorrichtung zum Beheizen eines Teils der Windenergieanlage (1),
- eine Belüftungseinrichtung zum Belüften wenigstens eines Teils der Windenergieanlage (1),
- ein Wechselrichter zum Einspeisen elektrischer Leistung und/oder
- eine Chopperwiderstandsvorrichtung zum Wandeln elektrischer Leistung in Wärme
umfassen.

4. Verfahren nach einem der vorstehenden Ansprüche,
**dadurch gekennzeichnet, dass**
in vorbestimmbaren Prüfzeitabständen überprüft wird, ob die Windenergieanlage (1), insbesondere der Generator in Betrieb ist und elektrische Leistung erzeugt, und dass die Windenergieanlage (1) bzw. der Generator andernfalls in Betrieb genommen wird.

5. Verfahren nach einem der vorstehenden Ansprüche,
**dadurch gekennzeichnet, dass**
das Inbetriebnehmen der Windenergieanlage (1) mittels einer Hilfsenergiequelle (2), insbesondere einer Batterie und/oder einem Hilfsgenerator (2), insbesondere einem Dieselgenerator (2) erfolgt.

6. Verfahren nach Anspruch 5,
**dadurch gekennzeichnet, dass**
die Hilfsenergiequelle (2) wieder von der Windenergieanlage (1) getrennt wird und/oder die Hilfsenergiequelle (2) wieder abgeschaltet wird, wenn die Windenergieanlage (1) in Betrieb ist, wobei die Windenergieanlage (1) sich selbst aus Wind so mit elektrischer Leistung versorgt, dass sie in Betrieb bleibt, sofern ausreichend Wind vorhanden ist.

7. Verfahren nach einem der vorstehenden Ansprüche,
**dadurch gekennzeichnet, dass**
wenigstens eines der elektrischen Elemente mit elektrischer Leistung von einer bzw. der Hilfsenergiequelle (2) zumindest zeitweise versorgt wird, wenn für das Inbetriebnehmen des Generators nicht ausreichend Wind vorhanden ist.

8. Verfahren nach einem der vorstehenden Ansprüche,
**dadurch gekennzeichnet, dass**
nach einer vorbestimmbaren Laufzeit der Generator wieder abgeschaltet wird und/oder das Versorgen der elektrischen Elemente wieder unterbrochen wird, wenn nicht ausreichend Wind zum Betreiben des Generators vorhanden ist.

9. Windenergieanlage (1) zum Erzeugen elektrischer Leistung aus Wind und zum Einspeisen der erzeugten elektrischen Leistung in ein elektrisches Versorgungsnetz (6), **dadurch gekennzeichnet, dass** ein Verfahren nach einem der vorstehenden Ansprüche ausgeführt wird.

10. Windenergieanlage (1) nach Anspruch 9,
**dadurch gekennzeichnet, dass**
eine Hilfsenergiequelle (2), insbesondere eine Batterie und/oder ein Hilfsgenerator (2), insbesondere ein Dieselgenerator (2) zum Versorgen der Windenergieanlage (1) vorgesehen ist, wobei die Hilfsenergiequelle (2) so dimensioniert ist, dass sie genügend Leistung und Energie zum Starten der Windenergieanlage (1) bereitstellen kann.

## Claims

1. Method for controlling a wind turbine (1) that comprises a generator, is provided to feed electrical power into an electricity supply grid (6) but has not yet been connected to the electricity supply grid (6), in a period from the substantially installation of the wind turbine until the connection of the wind turbine with the electrical supply grid, comprising the steps
- generating electrical power using the generator and
- supplying electrical elements of the wind turbine (1) with the power generated.

2. Method according to Claim 1, **characterized in that**
the wind turbine (1) is started up without power being fed into the electricity supply grid (6).

3. Method according to Claim 1 or 2, **characterized in that** the electrical elements comprise at least
- a control device for controlling the wind turbine (1),
- an azimuth adjustment device for adjusting an orientation of the wind turbine (1) relative to the wind,
- a heating device for heating a part of the wind turbine (1),
- a ventilation device for ventilating at least one part of the wind turbine (1),
- an inverter for feeding in electrical power and/or
- a chopper resistor for converting electrical power into heat.

4. Method according to one of the preceding claims,
**characterized in that**
a check is made at predeterminable checking intervals as to whetherthe wind turbine (1), in particular the generator, is operating and generating electrical power, and **in that** the wind turbine (1) or the generator is started up in a different fashion.

5. Method according to one of the preceding claims,
**characterized in that**
the wind turbine (1) is started up by means of an auxiliary energy source (2), in particular a battery and/or an auxiliary generator (2), in particular a diesel generator (2).

6. Method according to Claim 5,
**characterized in that**
the auxiliary energy source (2) is disconnected from the wind turbine (1) again and/or the auxiliary energy source (2) is switched off again when the wind turbine (1) is operating, wherein the wind turbine (1) supplies itself with electrical power from the wind in such a way that it remains operating as long as there is sufficient wind.

7. Method according to one of the preceding claims,
**characterized in that**
at least one of the electrical elements is supplied at least temporarily with electrical power by a or the auxiliary energy source (2) if there is insufficient wind to start up the generator.

8. Method according to one of the preceding claims,
**characterized in that**,
after a predeterminable period of time has elapsed, the generator is switched of again and/or the supply of power to the electrical elements is interrupted again if there is insufficient wind to operate the generator.

9. Wind turbine (1) for generating electrical power from the wind and for feeding the electrical power generated into an electricity supply grid (6), **characterized in that** a method according to one of the preceding claims is carried out.

10. Wind turbine (1) according to Claim 9,
**characterized in that**
an auxiliary energy source (2), in particular a battery and/or an auxiliary generator (2), in particular a diesel generator (2) is provided for supplying power to the wind turbine (1), wherein the auxiliary energy source (2) is dimensioned such that it can supply sufficient power and energy to start the wind turbine (1).

## Revendications

1. Procédé pour commander une éolienne (1) comprenant un générateur, prévue pour l'injection d'une puissance électrique dans un réseau d'alimentation électrique (6), mais pas encore raccordée au réseau d'alimentation électrique (6), dans un laps de temps allant de la construction sensible de l'éolienne jusqu'au raccordement de l'éolienne au réseau d'alimentation électrique, comprenant les étapes
- de production d'une puissance électrique avec le générateur et
- d'alimentation d'éléments électriques de l'éolienne (1) avec la puissance produite.

2. Procédé selon la revendication 1,
**caractérisé en ce que**
l'éolienne (1) est mise en marche sans qu'elle n'injecte de puissance dans le réseau d'alimentation électrique (6).

3. Procédé selon la revendication 1 ou 2,
**caractérisé en ce que**
les éléments électriques comprennent au moins
- un dispositif de commande pour commander l'éolienne (1),
- un dispositif de réglage d'azimut pour régler une orientation de l'éolienne (1) par rapport au vent,
- un dispositif de chauffage pour chauffer une partie de l'éolienne (1),
- un dispositif d'aération pour aérer au moins une partie de l'éolienne (1),
- un onduleur pour injecter une puissance électrique et/ou
- un dispositif de résistance à hacheur pour convertir une puissance électrique en chaleur.

4. Procédé selon l'une quelconque des revendications précédentes,
**caractérisé en ce que**
il est contrôlé par intervalles de contrôle pouvant être prédéfinis si l'éolienne (1), en particulier le générateur est en marche et produit une puissance électrique, et que l'éolienne (1) ou le générateur est sinon mis en marche.

5. Procédé selon l'une quelconque des revendications précédentes,
**caractérisé en ce que**
la mise en service de l'éolienne (1) s'effectue au moyen d'une source d'énergie auxiliaire (2), en particulier d'une batterie et/ou d'un générateur auxiliaire (2), en particulier d'un générateur diesel (2) .

6. Procédé selon la revendication 5,
**caractérisé en ce que**
la source d'énergie auxiliaire (2) est à nouveau séparée de l'éolienne (1) et/ou la source d'énergie auxiliaire (2) est à nouveau mise hors circuit, lorsque l'éolienne (1) est en marche, dans lequel l'éolienne (1) s'alimente automatiquement en puissance électrique à partir du vent, de sorte qu'elle reste en marche pour autant que suffisamment de vent soit présent.

7. Procédé selon l'une quelconque des revendications précédentes,
**caractérisé en ce que**
au moins un des éléments électriques est alimenté au moins temporairement en puissance électrique par une ou la source d'énergie auxiliaire (2), lorsque du vent n'est pas présent de manière suffisante pour la mise en service du générateur.

8. Procédé selon l'une quelconque des revendications précédentes,
**caractérisé en ce que**
après une durée de fonctionnement pouvant être prédéfinie le générateur est à nouveau mis hors circuit et/ou l'alimentation des éléments électriques est à nouveau interrompue, lorsque du vent n'est pas présent de manière suffisante pour faire fonctionner le générateur.

9. Eolienne (1) pour produire une puissance électrique à partir du vent et pour injecter la puissance électrique produite dans un réseau d'alimentation électrique (6), **caractérisée en ce qu'**un procédé selon l'une quelconque des revendications précédentes est mis en œuvre.

10. Eolienne (1) selon la revendication 9,
**caractérisée en ce que**
une source d'énergie auxiliaire (2), en particulier une batterie et/ou un générateur auxiliaire (2), en particulier un générateur diesel (2) est prévue pour alimenter l'éolienne (1), dans laquelle la source d'énergie auxiliaire (2) est dimensionnée de sorte qu'elle peut fournir suffisamment de puissance et d'énergie pour le démarrage de l'éolienne (1).
